# EUROPEAN PATENT APPLICATION

(11) **EP 1 607 966 A2**
(43) Date of publication of application: **21.12.2005**
(21) Application number: 05253685.1
(22) Date of filing: 14.06.2005
(51) Int. Cl.: G11B 20/00

(54) **Content reproduction apparatus, content reproduction method, content management apparatus, content management method and computer program**

(30) Priority: 17.06.2004 JP 2004180221
(71) Applicant: SONY CORPORATION, Tokyo 141 (JP)
(72) Inventor: Saeki, Keiko, c/o Sony Corporation, Tokyo (JP); Nagano, Motohiko, c/o Sony Corporation, Tokyo (JP); Sakamoto, Takahiro, c/o Sony Corporation, Tokyo (JP)
(74) Representative: DeVile, Jonathan Mark

(57) **Abstract**

A content reproduction apparatus and method is disclosed which can manage a use state for each one, two or more tracks included in a content and perform prescribed updating irrespective of the number of tracks reproduced in an overlapping relationship, with the following configuration. The content reproduction apparatus includes: a track selection section operable in response to a reproduction request of a content for selecting a track or tracks; a status ID reading section reads a status ID from the selected track; a license extraction section extracts a license corresponding to the status ID; a status information extraction section extracts, when the extracted license includes a use limitation condition, the status information corresponding to the status ID; and a license decision section decides whether or not the use state of the status information satisfies the use limitation condition of the license.

## Description

### BACKGROUND OF THE INVENTION

This invention relates to a content reproduction apparatus, a content reproduction method, a content management apparatus, a content management method and a computer program for reproducing and managing a content based on a license.

Conventionally, when a user tries to reproduce a content using a license owned thereby, a use state representative of the number of times by which the content has been utilized or the like is managed collectively with a single piece of status information with regard to all of a plurality of contents, and the use state is updated as occasion calls in response to reproduction of the content. However, such collective management of the use state has a problem in that, if such status information is broken or falsified, then all contents which are managed with the status information are disabled from utilization.

A technique for preventing such a situation as just described is known and disclosed, for example, in Japanese Patent Laid-Open No. 2003-308250 (hereinafter referred to as Patent Document 1). According to the technique disclosed in Patent Document 1, an information processing apparatus wherein contents and licenses are separated from each other manages status information of contents for each service including the contents and stores status information of each service and a corresponding license into separate management regions from each other.

In the technique disclosed in Patent Document 1, the number of times of reproduction and the reproduction time when a user reproduces a content are managed with corresponding status information. However, also in the technique, the minimum unit in production and updating of status information is limited to a content. Accordingly, status information corresponding to a content is repeatedly updated in a unit of a content irrespective of whether or not the individual content is utilized in various utilization forms.

### SUMMARY OF THE INVENTION

The present invention addresses the above-identified, and other problems associated with conventional apparatus. The present invention provides a novel and improved content reproduction apparatus, content reproduction method, content management apparatus, content management method and computer program which can manage a use state for each one, two or more tracks included in a content and perform prescribed updating irrespective of the number of tracks reproduced repeatedly.

In order to solve the matters described above, according to an embodiment of the present invention, there is provided a content reproduction apparatus, including: a data storage section for storing licenses of contents and status information representative of use states of the contents based on the licenses; a track selection section operable in response to a reproduction request of any of the contents for selecting one, two or more tracks from among one, two or more tracks included in the content; a status ID reading section for reading a status ID annexed to each of the tracks and specifying a relationship between the track and status information from the selected track; a license extraction section for extracting a license corresponding to the status ID from the data storage section; a status information extraction section for extracting, when the extracted license includes a use limitation condition, the status information corresponding to the status ID from the data storage section; a license decision section for deciding whether or not the use state of the status information satisfies the use limitation condition of the license; a status information updating section for updating the use state of the status information if the use limitation condition is satisfied; and a track reproduction section for reproducing the track if the use limitation is satisfied.

Here, the track signifies data having same attributes such as a format, a parameter and a bit rate like a video track and an audio track. The updating of the status information is to add, change or delete the reproduction time, reproduction period, number of times of reproduction and so forth of a track or tracks in a unit of a status ID. Further, a plurality of tracks selected by the track selection section are reproduced in an overlapping relationship or at the same time in accordance with a reproduction rule therefor by the content reproduction section. The use limitation to a license includes maximum values and permission/inhibition of recording into a recording medium of the reproduction time, reproduction period, number of times of reproduction, number of times by which copying is permitted, and number of times of checkout of a track in a unit of a status ID, whether or not transfer of the license is permitted, whether or not there is a use log obligation and so forth.

Although the status ID is annexed to a track, it may not necessarily be annexed to a track physically, but may be placed into data coordinated with a track, for example, into security information or the like.

The content reproduction apparatus is characterized in that, by annexing a status ID for each one, two or more tracks included in a content to be reproduced by a user, the use state is managed for each selection variation of tracks to be selected by the track selection section. By the configuration, it is possible to provide a license or the like corresponding to each of a plurality of tracks included in one content.

The content reproduction apparatus may be configured such that the status information extraction section extracts, if a plurality of tracks having the same status ID are selected by the track selection section, one piece of status information corresponding to the plurality of tracks, and the status information updating section updates the one piece of status information for the plurality of tracks having the same status ID by one.

The configuration presupposes that the same status ID is annexed to two or more tracks from among a plurality of tracks included in a content to be reproduced. The different tracks having the same status ID are managed with the same status information.

With the configuration, only by annexing the same status ID to a plurality of tracks which are to be defined as a single utilization unit, the plurality of tracks can be managed with the single piece of status information.

The content reproduction apparatus may be configured such that the status information can designate a plurality of status IDs by logical ORing and/or logical ANDing and the status information extraction section extracts, when a combination of status IDs of the tracks selected by the track selection section coincides with a condition of the status IDs designated by the status information, the status information, and the status information updating section updates the status information for the tracks corresponding to the condition of the status IDs designated by the status information.

In the configuration described hereinabove, a plurality of tracks have a common single status ID, and status information corresponding in a one-by-one corresponding relationship to the tracks is provided. In addition to the configuration, the present configuration makes it possible to manage a plurality of status IDs with one piece of status information.

For example, where one piece of status information designates two status IDs by logical ANDing, if a track having the two status IDs is selected by the track selection section and reproduced, then the status information updating section updates the status information. On the other hand, where one piece of status information designates two status IDs by logical ORing, the status information is updated in response to a reproduction information of one of the status IDs. Where the number of status IDs which make an object is three or more, the status information may designate three or more status IDs by mixed logical ANDing and ORing.

With the configuration described, a cinema content for Japan and another cinema content for a district in which the English language is spoken can be managed with a single content. More particularly, the content includes a video track, a Japanese language audio track and an English language audio track, and status information directly coupled to a license is allocated to two combinations including a combination of the video track and the Japanese language audio track and another combination of the video track and the English language audio track. In other words, the two combinations of the tracks, two corresponding pieces of status information and two licenses coordinated with the status information are controlled in the one content.

Variables which are an object of updating of the use state can be defined as global variables and local variables in the status information, and the status information updating section can update a global variable as the use state of the status information and a local variable relating to each track in the status information.

Usually, variables which are an updating object of the use state, for example, the reproduction time, reproduction period, number of times of reproduction, number of times by which copying is permitted, number of times of checkout and so forth of a track in a unit of a status ID, are described as the global variables in the status information. In the present invention, global variables which can be utilized over an overall area in the status information and local variables which can be utilized in a unit of a track are defined. The local variables in a unit of a track are not influenced by the other local variables. With the configuration described, a local variable and a global variable can be designated for each of the variables which are an updating object.

The definitions of the global and local variables in the status information may correspond in a one-by-one corresponding relationship also to a use limitation condition in a license.

A content ID for specifying a content to which tracks belong may be annexed to all of the tracks included in the content separately from the status ID. Where this configuration is used, where an individual truck is not designated but the entire content is designated, the status information can be managed with the content ID similarly with the status ID.

The track selection section may select tracks across a plurality of contents. With the configuration just described, a status ID can be annexed to particular tracks not only in one content but also, for example in a plurality of contents. Therefore, use states of tracks across different contents can be managed with a single piece of status information.

According to another embodiment of the present invention, there is provided a computer program for causing a computer to function as a data storage section for storing licenses of contents and status information representative of use states of the contents based on the licenses, a track selection section operable in response to a reproduction request of any of the contents for selecting one, two or more tracks from among one, two or more tracks included in the content, a status ID reading section for reading a status ID annexed to each of the tracks and specifying a relationship between the track and status information from the selected track, a license extraction section for extracting a license corresponding to the status ID from the data storage section, a status information extraction section for extracting, when the extracted license includes a use limitation condition, the status information corresponding to the status ID from the data storage section, a license decision section for deciding whether or not the use state of the status information satisfies the use limitation condition of the license, a status information updating section for updating the use state of the status information if the use limitation condition is satisfied, and a track reproduction section for reproducing the track if the use limitation is satisfied.

According to a further embodiment of the present invention, there is provided a content reproduction method, comprising a track selection step of selecting one, two or more tracks from among one, two or more tracks included in a content in response to a reproduction request of the content, a status ID reading step of reading a status ID annexed to each of the tracks and specifying a relationship between the track and status information representative of a use state of the content based on a license from the selected track, a license extraction step of extracting a license corresponding to the status ID from a data storage section, a status information extraction step of extracting, when the extracted license includes a use limitation condition, the status information corresponding to the status ID from the data storage section, a license decision step of deciding whether or not the use state of the status information satisfies the use limitation condition of the license, a status information updating step of updating the use state of the status information if the use limitation condition is satisfied, and a track reproduction step of reproducing the track if the use limitation is satisfied.

According to a still further embodiment of the present invention, there is provided a content management apparatus, including a status ID annexing section for annexing, to each one, two or more tracks included in a content, a status ID for specifying a relationship between the track or tracks and status information representative of a use state of the track or tracks, the status ID annexing section annexing, if a plurality of tracks are to be managed with one piece of status information, the same status ID to the plurality of tracks.

With the content management apparatus, a content to be reproduced by the content reproduction apparatus can be produced. Also it is possible to manage tracks having the same status ID using the same status information.

According to a yet further embodiment of the present invention, there is provided a computer program for causing a computer to function as a status ID annexing section for annexing, to each one, two or more tracks included in a content, a status ID for specifying a relationship between the track or tracks and status information representative of a use state of the track or tracks, the status ID annexing section annexing, if a plurality of tracks are to be managed with one piece of status information, the same status ID to the plurality of tracks.

According to an additional embodiment of the present invention, there is provided a content management method, including a status ID annexing step of annexing, to each one, two or more tracks included in a content, a status ID for specifying a relationship between the track or tracks and status information representative of a use state of the track or tracks, the status ID annexing step annexing, if a plurality of tracks are to be managed with one piece of status information, the same status ID to the plurality of tracks.

The components of the content reproduction apparatus or the content management apparatus may form separate apparatus or may be divided into a plurality of apparatus such that they cooperatively function as the content reproduction apparatus or the content management apparatus.

In summary, according to the present invention, it is possible to manage a use state for each one, two or more tracks included in a content and perform prescribed updating of the use state irrespective of the number of tracks which are reproduced in an overlapping relationship with each other. In other words, a plurality of use states or licenses can be set within one content. This makes it possible to manage a plurality of tracks collectively with a single use state or manage one content which involves a plurality of languages in use states which differ between or among the different languages.

### BRIEF DESCRIPTION OF THE DRAWINGS

The above and other objects, features and advantages of the present invention will become apparent from the following description and the appended claims, taken in conjunction with the accompanying drawings in which like parts or elements denoted by like reference symbols, and in which:
FIG. 1 is a diagrammatic view schematically illustrating license management by a conventional content reproduction apparatus;
FIG. 2 is a block diagram schematically showing a configuration of a content reproduction apparatus to which the present invention is applied;
FIG. 3 is a diagrammatic view illustrating a relationship between a status ID and status information in the content reproduction apparatus of FIG. 2;
FIGS. 4 and 5 are diagrammatic views schematically illustrating license management by the content reproduction apparatus of FIG. 2;
FIG. 6 is a diagrammatic view illustrating status information used in the license management of FIG. 5 which is in a changed state;
FIG. 7 is a diagrammatic view schematically illustrating the license management by the content reproduction apparatus of FIG. 2 but from a different point of view;
FIG. 8 is a diagrammatic view illustrating a configuration of a content reproduced by another content reproduction apparatus to which the present embodiment is applied;
FIG. 9 is a view illustrating a concept of an example of a configuration of attribute information used in the content reproduction apparatus of FIG. 8;
FIG. 10 is a flow chart illustrating a general flow of a contents reproduction method to which the present invention is applied;
FIG. 11 is a flow chart illustrating a general flow of a status information extraction step illustrated in FIG. 10; and
FIG. 12 is a block diagram schematically showing a configuration of a content management apparatus.

### DETAILED DESCRIPTION OF THE PREFERRED EMBODIMENTS

In conventional content reproduction apparatus, one piece of status information is coordinated with a unit of a content or a group including a plurality of contents, and the status information is managed with a license.

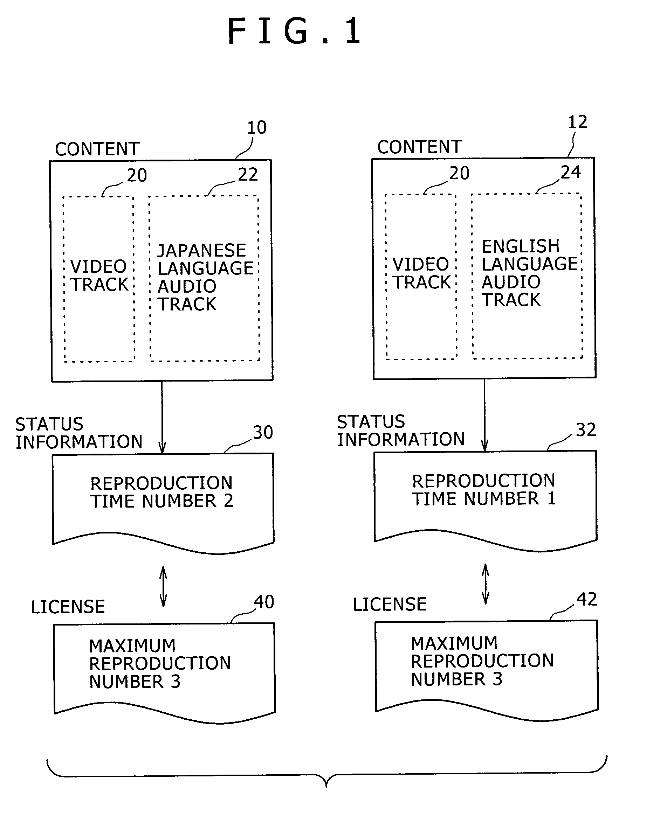

FIG. 1 schematically illustrates license management by a conventional content reproduction apparatus. Referring to FIG. 1, two contents 10 and 12 are referred to. The content 10 includes a video track 20 and a Japanese language audio track 22 while the other content 12 includes a video track 20 and an English language audio track 24. The video tracks 20 included in both contents 10 and 12 are the same track.

Status information 30 is coordinated with the content 10 while status information 32 is coordinated with the content 12. Further, the status information 30 and 32 is managed with different licenses 40 and 42, respectively.

The relationships are described in more detail in connection with the content 10. If a user reproduces the content 10 on the conventional content reproduction apparatus, then at least an item of the number of times of reproduction of the status information 30 set corresponding to the content 10 is updated. In other words, the display of "one time" prior to the reproduction is incremented to "two times". The license 40 relating to the reproduction of the content 10 prescribes that the maximum number of times of reproduction is 3, and consequently, the number of times of reproduction of the content 10 is limited to three times. Accordingly, if the user tries to reproduce the content 10 by more than three times, then the maximum number of times of reproduction of the license 40 and the number of times of reproduction of the status information 30 are compared with each other and the reproduction of the content 10 is not performed. A similar process is performed also with regard to the content 12, status information 32 and license 42.

Since status information and a license can conventionally be linked to each other only in a unit of a content, where an application for Japan and another application for a district in which English is spoken are possible as described above, even if the video track 20 is common, there is the necessity to produce two different contents from each other. Even if the video track 20, Japanese language audio track 22 and English language audio track 24 can be placed into one content, management of the tracks for each reference variation is difficult. After all, the status information common to the two variations (video track 20 + Japanese language audio track 22 and video track 20 + English language audio track 24) is used for the management, and the number of times of reproduction and so forth are updated irrespective of whichever one of the variations is utilized.

With such a configuration as described above, inconvenience is exhibited in setting of a license and so forth, and it is obliged to produce an unnecessary track (in the example described above, the video track 20).

### <First Embodiment: Content Reproduction Apparatus>

In a first embodiment of the present invention, a status ID is applied to each one, two or more tracks included in a content to be reproduced by a user. Then, firstly status information is managed in a coordinated relationship with the track or tracks to which the status ID is applied. Secondly, the content side is operated to manage a plurality of tracks in a coordinated relationship with one piece of status information. Thirdly, the status information side is operated to manage a plurality of tracks in a coordinated relationship with a piece of status information from a different point of view. By the management, a license or the like corresponding to each of a plurality of tracks included in one content can be provided. Here, tracks include not only video and audio data but also various data such as subtitle data, text data and thumbnail data.

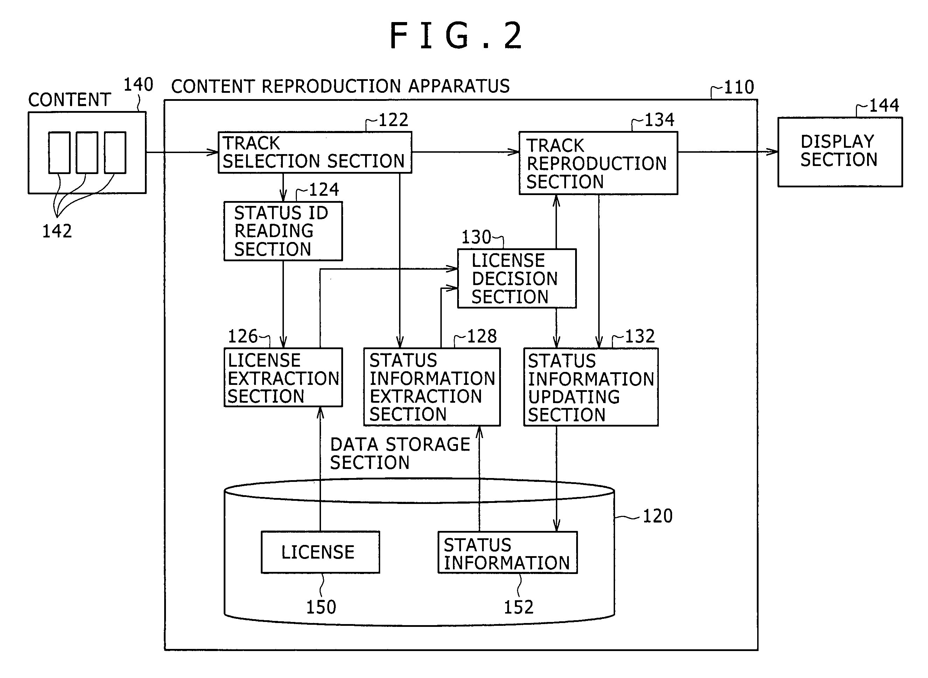

FIG. 2 schematically shows a configuration of the content reproduction apparatus according to the present embodiment. Referring to FIG. 2, the content reproduction apparatus is denoted by 110 and includes a data storage section 120, a track selection section 122, a status ID reading section 124, a license extraction section 126, a status information extraction section 128, a license decision section 130, a status information updating section 132 and a track reproduction section 134.

The data storage section 120 stores licenses 150 and status information 152 representative of use states of contents therein based on the licenses 150. The licenses 150 and the status information 152 are coordinated with the same status IDs hereinafter described. Accordingly, they may be stored collectively in the same files. Further, the licenses 150 and the status information 152 may be stored in an encrypted form.

The track selection section 122 selects one, two or more tracks 142 from among one, two or more tracks included in a content 140. The content 140 may be read out from a storage medium or may be read in from a content transmission server or the like through a communication network such as the Internet. Each track is included in separate storage units of, for example, video data, image data, audio data, text data and so forth in the content.

The status ID reading section 124 refers to the track or tracks selected by the track selection section 122 to read a status ID applied to each track and specifying a relationship of the track to status information.

The license extraction section 126 extracts a license 150 corresponding to the status ID from the data storage section 120.

The status information extraction section 128 extracts, where the extracted license includes a use limitation condition, the status information 152 corresponding to the status ID from within the data storage section 120.

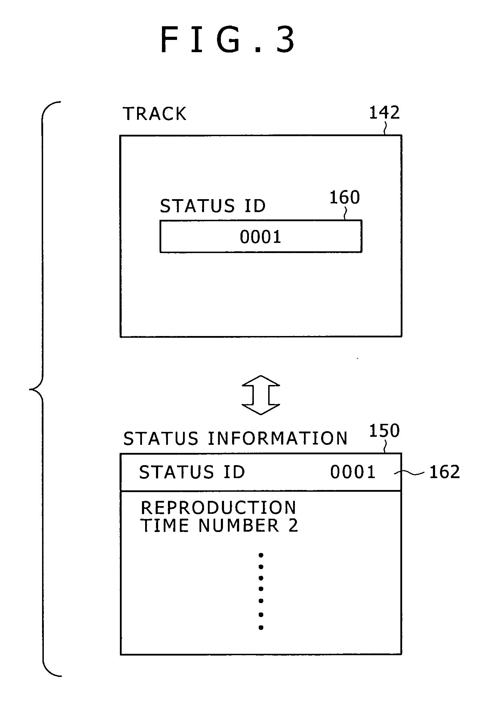

FIG. 3 illustrates a relationship between a status ID applied to a track and status information. Each track 142 in the content 140 has a status ID 160 annexed thereto. The status ID 160 can represent a subdivided utilization unit of the content. Meanwhile, the status information 152 designates the status ID as a header 162 for specifying a corresponding track. The status information extraction section 128 extracts status information which designates the status ID 160 read from a track and coordinates the track and the status information with each other.

Here, the reason why not a unique track ID but a status ID is annexed to each track is that, by annexing the same status ID to different tracks hereinafter described, a plurality of tracks can be managed with the same status information. However, a unique track ID may be annexed to each track in place of the status ID.

The license decision section 130 decides whether or not the use state of the extracted status information 152 satisfies the use limitation condition of the license 150, that is, compares a numerical value in the status information 152 and the limitation value in the license 150 with each other to determine whether reproduction of the content should be permitted or inhibited. Here, if the license decision section 130 decides that the reproduction in the present cycle satisfies the use limitation condition, then it issues an instruction to the status information updating section 132 to update the use state and issues a reproduction permission to the track reproduction section 134.

The status information updating section 132 updates the use state of the status information 152 in accordance with an updating instruction from the license decision section 130. Such updating is performed by addition, change or deletion of a reproduction time, a reproduction period, a number of times of reproduction, a number of times by which copying is permitted, a number of times of checkout or the like of the track in a unit of a status ID. Further, in response to the reproduction permission from the license decision section 130, reproduction of the track is performed by the track reproduction section 134. The status information updating section 132 may update the status information 152 when such reproduction satisfies a predetermined condition.

Where the use limitation is the number of times of reproduction, for example, the predetermined condition may be that reproduction of the track is performed for more than a predetermined period of time (for example, 10 seconds). When the predetermined period of time elapses, the status information updating section 132 increments the number of times of reproduction of the status information 152. Where such a predetermined condition as just described is set, the problem that, when the track is reproduced in error, the reproduction is taken into account as one time of reproduction can be eliminated.

When the license decision section 130 permits the reproduction, the track reproduction section 134 reproduces the track selected by the track selection section 122 on a display section 144. Such reproduction of the track is performed in an overlapping relationship or at the same time in accordance with the reproduction rule. Further, depending upon the content, another rule that selected (extracted) tracks are reproduced without overlapping them successively may be applied, and the "in an overlapping relationship or at the same time" does not exclude the reproduction rule just described.

Also a computer program for causing a computer to function as the components described hereinabove is provided.

Particular management of a content to be reproduced by the content reproduction apparatus 110 having such a configuration as described above is described below.

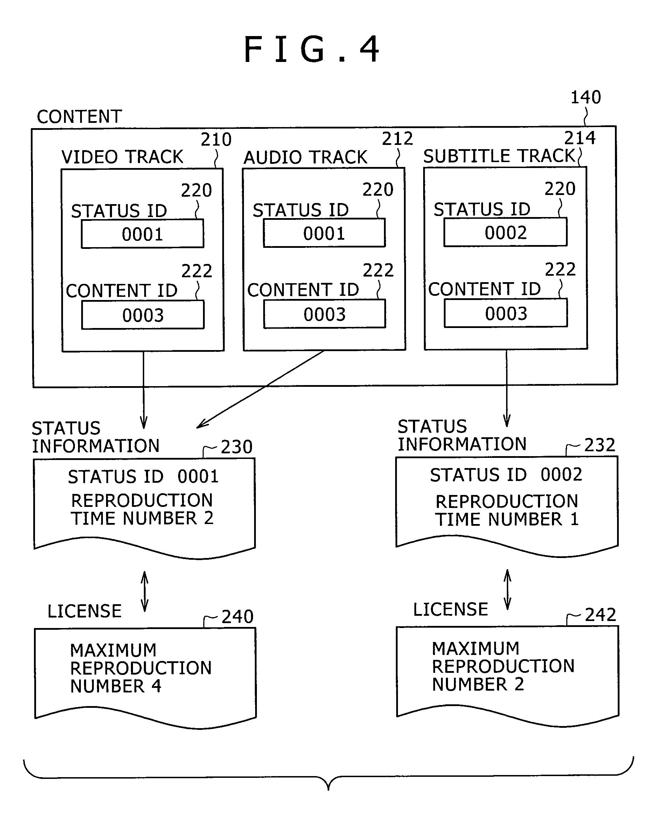

As one of characteristics of the present embodiment, if tracks selected by the track selection section 122 include a plurality of tracks having the same status ID, the status information extraction section 128 extracts one piece of status information corresponding to the plural tracks, and the status information updating section 132 updates the one piece of status information once for the plural tracks having the same status ID. Such management of content reproduction is described with reference to FIG. 4.

FIG. 4 schematically illustrates license management by the present embodiment. Referring to FIG. 4, a content 140 includes a video track 210, an audio track 212 and a subtitle track 214, to each of which a status ID 220 and a content ID 222 are annexed.

The video track 210 is video data of moving pictures and still pictures, and the audio track 212 is audio data of sound, music, BGM and so forth. The subtitle track 214 is data of a subtitle to be distributed in place of or an in an overlapping relationship with the audio track 212.

The status ID 220 is annexed to each track as seen in FIG. 4 and specifies a relationship between the track and status information, here, the status information itself. The content ID 222 is defined one for each content and is annexed to all tracks included in the content 140. If it is tried to reproduce all tracks included in such a content 140 as described above, it is possible to designate "0003" which is the content ID 222 or to designate all tracks with the status ID.

If the video track 210 and the audio track 212 in the content 140 in FIG. 4 are designated in order to reproduce them, then although the two tracks are designated, one piece of status information 230 is updated. This represents that the status information 230 corresponds to the status ID "0001" and, even if a plurality of tracks having the status ID "0001 are reproduced at the same time (in the following description, the term "simultaneous" is used to represent that such tracks are reproduced in an overlapping relationship in accordance with the reproduction rule but may not be reproduced strictly at the same time), the status information 230 is updated by only one time.

In particular, even if the video track 210 and the audio track 212 are reproduced, the status information updating section 132 does not count reproduction of each of the tracks as one time but counts reproduction of both tracks as only one time. Accordingly, even if only the video track 210 or the audio track 212 is reproduced, the number of times of reproduction of the status information 230 is incremented by one, and even if both of the video track 210 and the audio track 212 are reproduced simultaneously, the number of times of reproduction is incremented only by one.

However, if the subtitle track 214 which is different in the status ID 220 from that of the video track 210 or the audio track 212 is reproduced simultaneously with the video track 210 or the audio track 212, then only the subtitle track 214 is managed with different status information 232. Where the three tracks 210, 212 and 214 are selected in this manner, the status information updating section 132 extracts the status information 230 and 232 corresponding to the status IDs "0001" and "0002" annexed to the three tracks 210, 212 and 214. Thereafter, the license decision section 130 compares the numbers of times of reproduction of the status information 230 and 232 with the maximum numbers of times of reproduction of licenses 240 and 242 to perform permission of reproduction. Here, if any one of the numbers of times of reproduction of the status information 230 and 232 exceeds the maximum number of times of reproduction of the corresponding one of the licenses 240 and 242, then the reproduction of all of the selected tracks may be inhibited or otherwise only the track or tracks managed with the status information which does reach the limitation to the license may be permitted for reproduction.

Where such control as described above is used, it is possible to define a plurality of licenses for one content simply. For example, according to the license 240, reproduction of the combination of the video track 210 and the audio track 212 may be performed up to four times. Or, where a subtitle is utilized, the number of times of reproduction can be set finely up to twice as in the case of the license 242.

Another characteristic of the present embodiment is that a plurality of pieces of status information can be designated by logical ORing or logical ANDing. When the combination of status IDs of tracks selected by the track selection section 122 coincides with the condition of status IDs designated by the status information, the status information extraction section 128 extracts the status information and the status information updating section 132 performs a process of updating the status information of the tracks corresponding to the condition of the status IDs designated by the status information. In the following, particular management of a plurality of tracks coordinated with one piece of status information by adding a condition to the status information side (license side) is described.

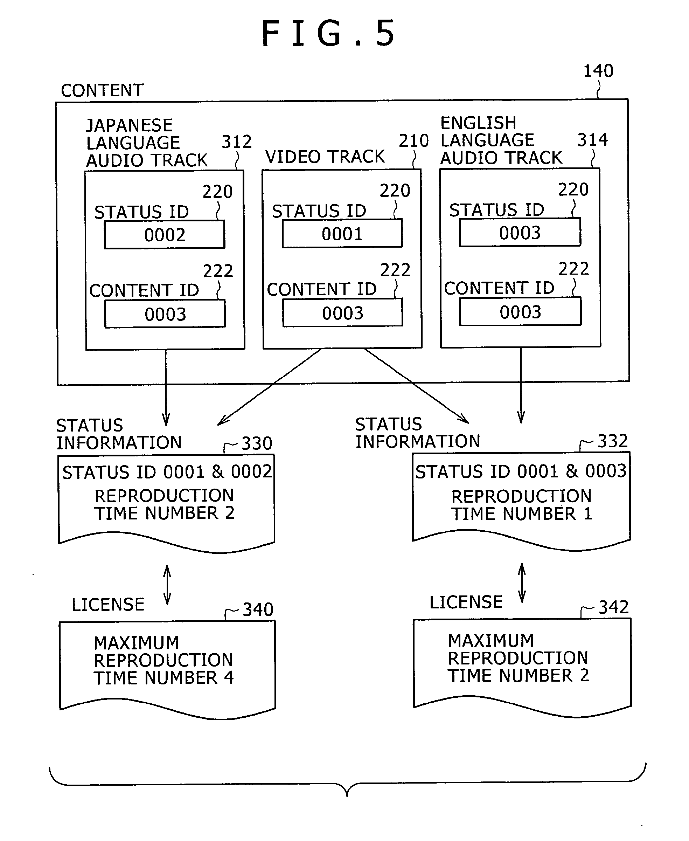

FIG. 5 schematically illustrates license management by the present embodiment as viewed from a different point of view. Referring to FIG. 5, a content 140 includes a video track 210, a Japanese language audio track 312 and an English language audio track 314, to each of which a status ID 220 and a content ID 222 are annexed.

The video track 210 is video data of moving pictures and still pictures, and the Japanese language audio track 312 is audio data of the Japanese language while the English language audio track 314 is audio data of the English language.

The status ID 220 is annexed to each track and specifies a relationship between the track and status information, here, an object to be managed by the status information. The content ID 222 is defined one for each content and is annexed to all tracks included in the content 140. If it is tried to reproduce all tracks included in the content 140 having the configuration described above, it is possible to designate "0003" of the content ID 222 or to designate all of the tracks with the status ID.

Referring to FIG. 5, if it is tried to designate the video track 210 and the Japanese language audio track 312 in the content 140 to reproduce them, then since they have different status IDs from each other, the status information extraction section 128 usually detects two pieces of status information from the data storage section 120. Then, if any of the two pieces of status information designates a plurality of status IDS, then the status information extraction section 128 first confirms the status IDs of the status information.

Accordingly, the status information extraction section 128 extracts the video track 210 selected in the present cycle and status information 330 which includes two status IDs "0001" and "0002" of the Japanese language audio track 312 also selected in the present cycle. In the status information 330, the two status IDs are designated with logical ANDing. Therefore, if the track having the status IDs "0001" and "0002" is reproduced at least once for each status ID, the number of times of reproduction of the status information 330 is updated by one time.

Similarly, if it is tried to designate the video track 210 and the English language audio track 314 in the content 140 to reproduce them, then the status information extraction section 128 first confirms whether or not a plurality of status IDs are designated by any piece of the status information. At this time, the video track 210 selected in this cycle and status information 332 including the two status IDs "0001" and "0003" of the English language audio track 314 selected in this cycle are extracted. In the status information 332, the two status IDs are designated with logical ANDing. Therefore, if the track having the status IDs "0001" and "0003" is reproduced at least once for each status ID, then the number of times of reproduction of the status information 332 is updated by one time.

Here, if it is assumed such that the two status IDs designated by the status information 332 are represented otherwise with logical ORing, then not only when both of the video track 210 and the English language audio track 314 are reproduced simultaneously, but also when only one of the video track 210 and the English language audio track 314 is reproduced, the number of times of reproduction of the status information 332 is incremented by one time.

Thereafter, the license decision section 130 compares the numbers of times of reproduction of the status information 330 and 332 and the maximum numbers of times of reproduction of licenses 340 and 342 with each other to permit reproduction of them. Here, if any one of the numbers of times of reproduction of the status information 330 and 332 exceeds the maximum number of times of reproduction of the corresponding one of the licenses 340 and 342, then the reproduction of all of the selected tracks may be inhibited or only the track managed with the status information which does not reach the limitation to the license may be permitted.

Further, in the case described above, in order to prevent such a situation that sound of the Japanese language and sound of the English language mix with each other and cannot be caught well, the Japanese language audio track 312 and the English language audio track 314 may be selected exclusively with each other.

By performing such control as described above, difference licenses can be provided to the combination of the video track 210 and the Japanese language audio track 312 and the combination of the video track 210 and the English language audio track 314. For example, if the English language track requires a higher production cost, a reasonable price can be presented by adjusting the upper limit to the number of times of reproduction or the like. While the foregoing description describes two audio tracks of the Japanese language and the English language, the languages to be included in one content are not limited to them, but multiple languages can be included in one content. Further, the substance of a license may be changed not only for such an audio track as described above but also for each BGM to be reproduced simultaneously.

Further, since a piece of status information can designate a plurality of status IDs, a status ID annexed to a track is designated in an overlapping relationship from a plurality of pieces of status information. Where a status ID extracted is designated by a plurality of pieces of status information simultaneously, it is arbitrarily determined depending upon a utilization method which one of the pieces of status information should be updated preferentially.

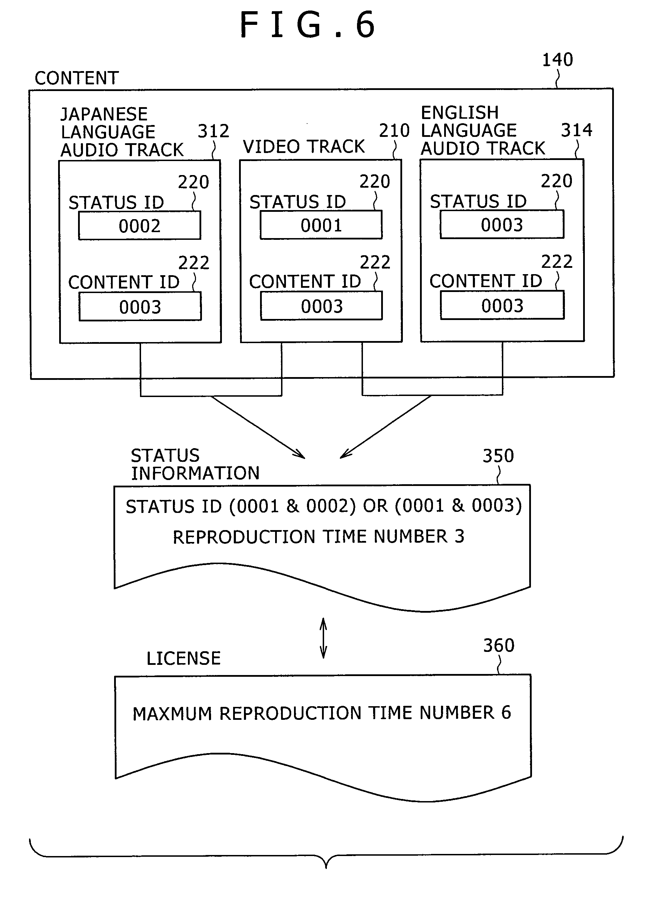

Further, FIG. 6 illustrates a change of the status information in the license management illustrated in FIG. 5. Here, status information 350 refers to four status IDs and couples the status IDs by logical ANDing and logical ORing to designate a track.

The designation of the status ID of the status information 350 is "(0001 & 0002) or (0001 & 0003)". Thus, if the status IDs 0001 and 0002 are reproduced simultaneously or else if the status IDs 0001 and 0003 are reproduced simultaneously, then the use state is updated.

Naturally, a license 360 corresponds also to the status information 350. According to the license 360, the combination of the video track 210 and the Japanese language audio track 312 or the combination of the video track 210 and the English language audio track 314, that is, any of video data with audio data of the Japanese language and video data with audio data of the English language can be enjoyed totally six times.

As a further characteristic of the present embodiment, a variable which is an object of updating of a use state includes a global variable and a local variable which can be defined in status information. The status information updating section 132 can update a global variable as a use state of status information and a local variable regarding each track in the status information.

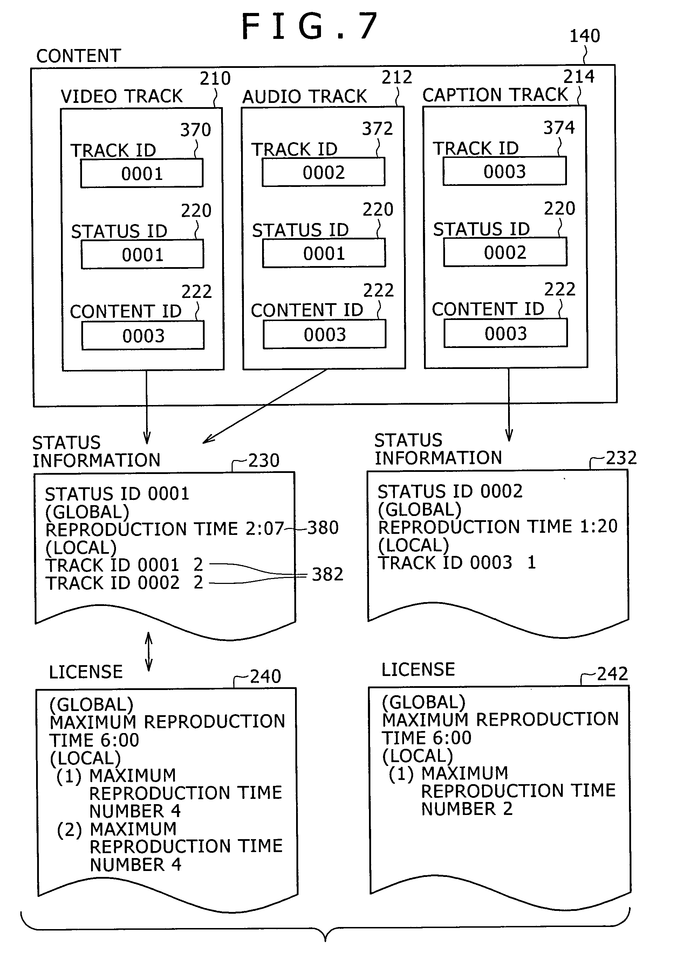

Usually, variables of an updating object of a use state, for example, the reproduction time, reproduction period, number of times of reproduction, number of times by which copying is permitted, number of times of checkout and so forth of a track in a unit of a status ID, are described as global variables in status information. In the present embodiment, global variables which can be utilized over an overall area in status information and local variables which can be utilized in a unit of a track are defined. The local variables in a unit of a track are not influenced by the other local variables. In the following, management performed using such variables as mentioned above is described particularly with reference to FIG. 7.

FIG. 7 schematically illustrates the license management illustrated in FIG. 4 but from a different point of view. Referring to FIG. 7, the content 140 includes a video track 210, a Japanese language audio track 212 and a subtitle track 214, to each of which a track ID 370, 372 or 374, a status ID 220 and a content ID 222 are annexed.

As described hereinabove with reference to FIG. 4, the status ID 220 is annexed for each track and specifies a relationship between the track and status information, here, the status information itself. The content ID 222 is defined one for each content and annexed to all tracks included in the content 140. The license management illustrated in FIG. 7 is different from that illustrated in FIG. 4 that the track ID 370, 372 or 374 is annexed to each track.

Here, in the status information 230 specified by the status ID "0001", a global variable 380 relating to the reproduction time and local variables 382 relating to the number of times of reproduction are defined. The global variable 380 indicates the reproduction time of the entire status information 230, and the local variables 382 to which the track IDs 370 and 372 are annexed indicate the numbers of times of reproduction of the individual tracks. In this instance, according to the license 240 coordinated with the status ID "0001", the video track 210 and the audio track 212 can be utilized until the reproduction time defined as the global variable 380 exceeds six hours or until the number of times of reproduction defined as each of the local variables 382 exceeds four times.

The global variable 380 and the local variables 382 can be set to use limitations different from each other as described above or may be set to an equal limitation. In particular, in the example described above, both of the global variable 380 and the local variables 382 may be defined as a number of times of reproduction. Further, only one of the global variable 380 and the local variables 382 may be set.

The variables which are an updating object of a use state, for example, the reproduction time, reproduction period, number of times of reproduction, number of times by which copying is permitted, number of times of checkout and so forth of a track in a unit of a status ID, can be described as local variables or global variables. In the present embodiment, for each of variables, a local variable and a global variable may be designated so that various licenses can be provided. Further, the global and local variables in the status information described above may correspond in a one-by-one corresponding relationship to a use limitation condition in a license.

Such a global variable and a local variable as described above can be annexed not only to variables in status information in the present embodiment but also to variables which are used in security information hereinafter described or a DRM module which manages such security information. Where a variable is designated in this manner, an attribute of the variable (global/local, reading permitted/inhibited, initial value) is defined in connection with the variable.

### <Second Embodiment: Content Reproduction Apparatus>

In order to facilitate understanding, a more particular working example of the content reproduction apparatus 110 described hereinabove is described below.

Where a charged content or the like is utilized, contents are managed using a copyright management system technique or the like. More particularly, the copyright management system sets a license of a content such that it permits utilization of the content comparatively freely to a legal user (a user who pays a reasonable consideration to the copyright of the content to purchase the content and utilizes the content within the range of private use). On the other hand, the copyright management system restricts utilization of the content severely to a user who conducts such illegal utilization as an act of transmission of a content by a large amount through the Internet or the like or a user who tries to utilize a content exceeding the range of the license without paying a reasonable consideration.

In the copyright management system described above, an application for reproducing a content performs communication and management of such contents, right data and so forth through a DRM (Digital Right Management) module. Status information and licenses described below are controlled by the DRM module.

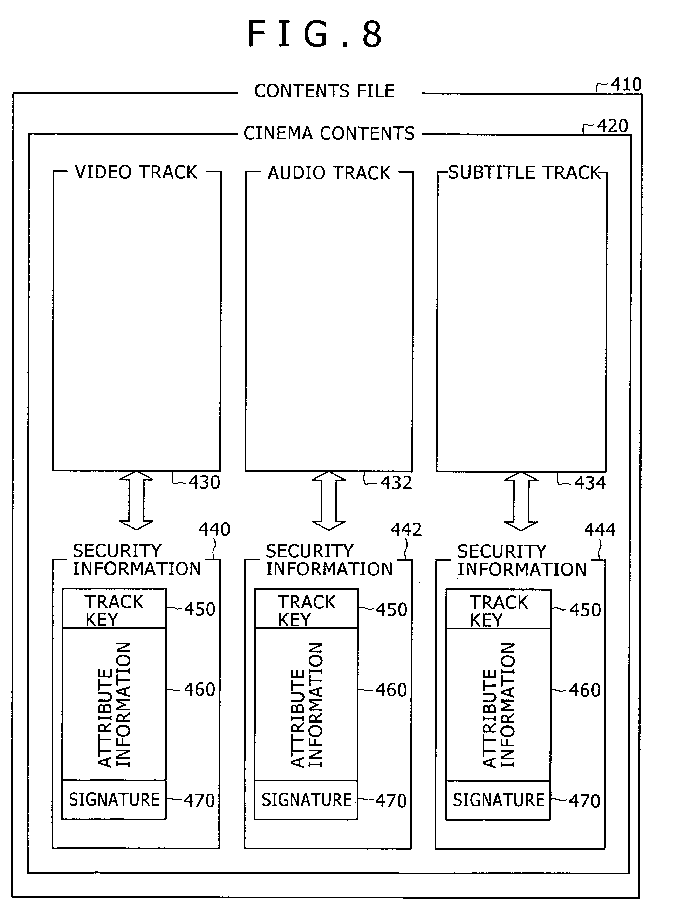

FIG. 8 illustrates a configuration of a content reproduced by the content reproduction apparatus according to the present embodiment. Here, description is given taking an example of a configuration of a cinema content into consideration.

As seen in FIG. 8, one cinema content 420 is included in one content file 410. The cinema content 420 includes, for example, a video track 430, an audio track 432, a subtitle track 434, and security information 440, 442 and 444 corresponding to the tracks 430, 432 and 434, respectively.

The tracks included in the cinema content 420 are components of the content and data representing the actual substance of the content. The number of tracks which form one content differs among different contents, and in the example of FIG. 8, the content shown is formed from three tracks 430, 432 and 434. Of the three tracks 430, 432 and 434, the video track 430 includes video data which are moving picture data corresponding to images of a cinema. Meanwhile, the audio track 432 includes audio data corresponding to sound of the cinema. Further, the subtitle track 434 includes subtitle data of the cinema. The tracks 430, 432 and 434 are in a form wherein they are encrypted with a track key 450 included in corresponding security information.

It is to be noted that the content may be formed only from one of the video track 430, audio track 432 and subtitle track 434, or may include some other track such as, for example, a still picture track or a character information track relating to music.

The security information is information (SINF: Security Information) for performing copyright management of the content and is added for each track by the content reproduction apparatus 110 or a content transmission server or the like connected to the content reproduction apparatus 110 through a communication network. In the example of FIG. 8, three pieces of security information 440, 442 and 444 are added to the three tracks 430, 432 and 434 in the one cinema content 420, respectively. It is to be noted that, while, in the present embodiment, security information is provided in a unit of a track in this manner, the provision of security information is not limited to this, and for example, where license management in a unit of a track is not performed, security information may be provided in a unit of a content.

The security information includes, for example, a track key 450, attribute information 460 and a signature 470 all in an encrypted form.

The track key 450 is a key for decrypting (decoding) each track which is in an encrypted form. The track key 450 of the security information 440 is a key for decrypting the video track 430, and the track key 450 of the security information 442 is a key for decrypting the audio track 432. The track key 450 of the security information 444 is a key for decrypting the subtitle track 434. Further, also such track key themselves are in an encrypted form. Accordingly, if an appropriate license is not available, then a track key cannot be decrypted, and as a result, it is impossible to decrypt and reproduce content data of the track.

The attribute information 460 is information representative of attributes of the content and includes a plurality of content attribute IDs hereinafter described. A status ID and a content ID described hereinabove are included in the content attribute ID. The attributes of the content include not only natures and characteristics (for example, a status, a file, a track and so forth) concerning copyright management of the contents but also natures, characteristics (for example, the director, a leading actor or actress and so forth of the content) concerning the substance of the content. In the present embodiment, the attribute information 460 is determined for each of tracks which form the content and represents attributes of the tracks which form the content. Therefore, even in the same cinema content 420, the attribute information 460 annexed to a different track may be different information. The attribute information 460 annexed to the content in this manner is utilized to establish matching between the content and a license. Such attribute information 460 includes, for example, an attribute code and a content attribute ID.

The signature 470 is a digital signature annexed by the content reproduction apparatus 110 or a content transmission server or the like connected to the content reproduction apparatus 110 through a communication network, and has a function of preventing falsification of the entire security information. The signature 470 includes, for example, also a certificate for verifying the validity of the digital signature.

Now, the attribute information 460 according to the present embodiment is described in detail.

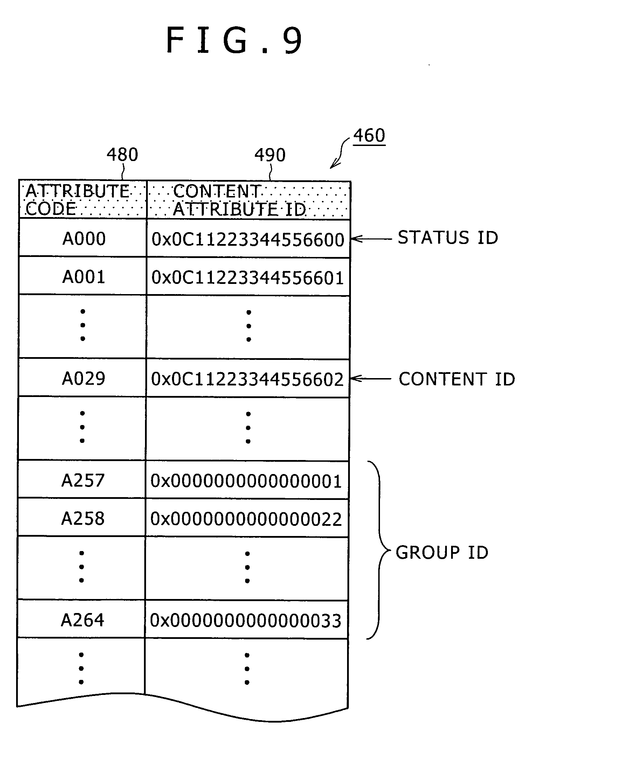

FIG. 9 illustrates a concept of an example of a configuration of the attribute information 460 according to the present embodiment. Referring to FIG. 9, the attribute information 460 includes attribute codes 480 and content attribute IDs 490 corresponding to the attribute codes.

As described hereinabove, the attribute information 460 is information representative of attributes of the track. The attribute information 460 is set, for each content, by the content reproduction apparatus 110 or a content transmission server or the like connected to the content reproduction apparatus 110 through a communication network and annexed in securing information corresponding to the track.

Each attribute code 480 is an identification code for identifying the type of an attribute of the content. The attribute code 480 is a code determined commonly for each type of an attribute of the content, for example, in the copyright management system irrespective of whether or not the content to which the attribute information 460 is annexed is different or same. The attribute code is formed from a character string of four characters such as, for example, "A000". In the present embodiment, for example, 1,000 different attribute codes from "A000" to "A999" can be set, and consequently, 1,000 different attributes can be defined.

Each content attribute ID 490 is an ID for specifying an attribute of the content. The content attribute ID is formed from a unique character string (in the example of FIG. 9, a character string of 14 characters) for each attribute of the content and uniquely specifies the attribute of the content to which the content attribute ID is annexed. A plurality of different content attribute IDs are set for each type (attribute code described hereinabove) of an attribute of the content. In the following, the content attribute IDs are described individually.

The content attribute ID whose attribute code is "A000" is a status ID. The status ID is an ID annexed uniquely in a "track to which a license is applied". The "track to which a license is applied" is a set of data significant as an object of copyright management wherein a license is used. By applying the status ID to a content, the "content to which a license is applied" which is circulated in the system can be identified.

Here, a manager (service provider) who manages contents can freely determine a unit to which a status ID is to be annexed (that is, a unit of a track to which a license is applied) in various forms.

For example, such a status ID as described above may be annexed in such a manner that the same status ID is annexed to a plurality of tracks or annexed in a unit of a content. Also it is possible to annex the same status ID to a plurality of tracks across different contents. In this instance, status information according to individual combinations is associated with each other, and licenses are applied in response to the status information.

The content attribute ID whose attribute code is, for example, "A029" is a content ID (also called file ID). This content ID is annexed uniquely in a unit of a content file including one, two or more tracks. For example, in the example of FIG. 8, one file ID is annexed to the content file 410 including one cinema content 420. By applying such a content ID as described above to a content, a file of a content which is circulated in the system can be identified.

The eight content attribute IDs having attribute codes of, for example, "A257" to "A264" are group IDs. The group IDs are annexed uniquely in a unit of a common attribute which is an attribute common to a plurality of contents. The common attributes represented by the group IDs can be set freely by the manager (service provider) of the server from which contents are distributed.

As described hereinabove, status information is associated with such a status ID as described above. The DRM module of the content reproduction apparatus 110 first reads in security information corresponding to a designated track and extracts a status ID from the attribute information 460 in the security information. Furthermore, the DRM module refers to the status information associated with the status ID to confirm whether or not the substance of the status information is within the limitation of the license.

After the license decision section 130 completes confirmation of the license, the track designated with the track key 450 in the security information is decoded and placed into a reproducible state.

### <Third Embodiment: Content Reproduction Method>

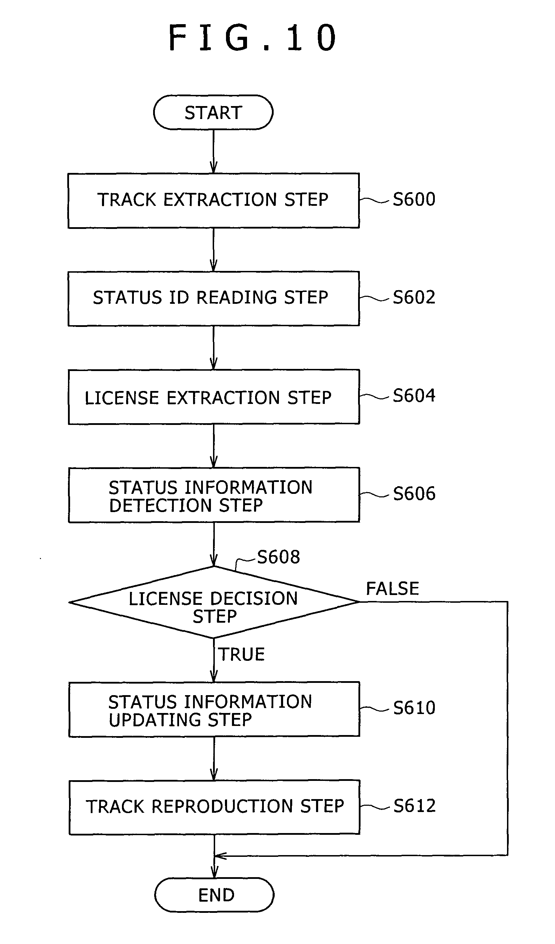

Now, a content reproduction method according to a third embodiment of the present invention is described with reference to FIG. 10.

FIG. 10 illustrates a general procedure of the content reproduction method of the present embodiment. Referring to FIG. 10, according to the content reproduction method, one, two or more tracks are selected from among one, two or more tracks included in a content in accordance with a desire of enjoyment of a user (step S600).

A status ID annexed to each of the selected tracks is read (step S602), and a license corresponding the read ID is extracted from the data storage section 120 (step S604). If the licenses extracted in this manner have some use limitation condition, then status information corresponding to the status IDs is extracted from the data storage section 120 (step S606). Thereafter, the substance of the extracted status information and the substance of the licenses are compared with each other to decide whether or not the use limitation condition is satisfied (step S608).

If a reproduction permission is issued at the license decision step S608, then the use state of the status information is updated (step S610), and the track or tracks selected at the track selection step S600 are reproduced (step S612). The status information updating step S610 may be executed after the track reproduction step S612 executed in response to a reproduction permission at the license decision step S608 such that the use state is updated in response to the reproduction at the track reproduction step S612.

The content reproduction method generally includes the track selection step S600, status ID reading step S602, license extraction step S604, status information extraction step S606, license decision step S608, status information updating step S610 and track reproduction step S612 described above. The individual steps are described more particularly below.

At the track selection step S600, detailed reproduction setting of a content whose enjoyment the user wants is performed. For example, if the user wants to enjoy the content illustrated in FIG. 4, then it is possible to select the combination of the video track 210 and the audio track 212 or the combination of them further with the subtitle track 214. This is carried out by the content reproduction apparatus 110 displaying all tracks included in the content to allow the user to select a track freely. Alternatively, the content reproduction apparatus 110 may read in the status IDs of the tracks in advance and allow the user to select a group of tracks having the same status ID.

At the status ID reading step S602, the application instructs the DRM module to read at least the status IDs of the tracks. The DRM module receiving the instruction refers to the licenses and security information coordinated with the tracks selected at the track selection step S600. If a group of tracks having the same status ID are selected at the track selection step S600, then it is possible for the DRM module to carry out a step of confirming whether or not the status IDs annexed to the tracks are actually same as each other.

At the license extraction step S604, licenses corresponding to the status IDs read at the status ID reading step S602 are extracted.

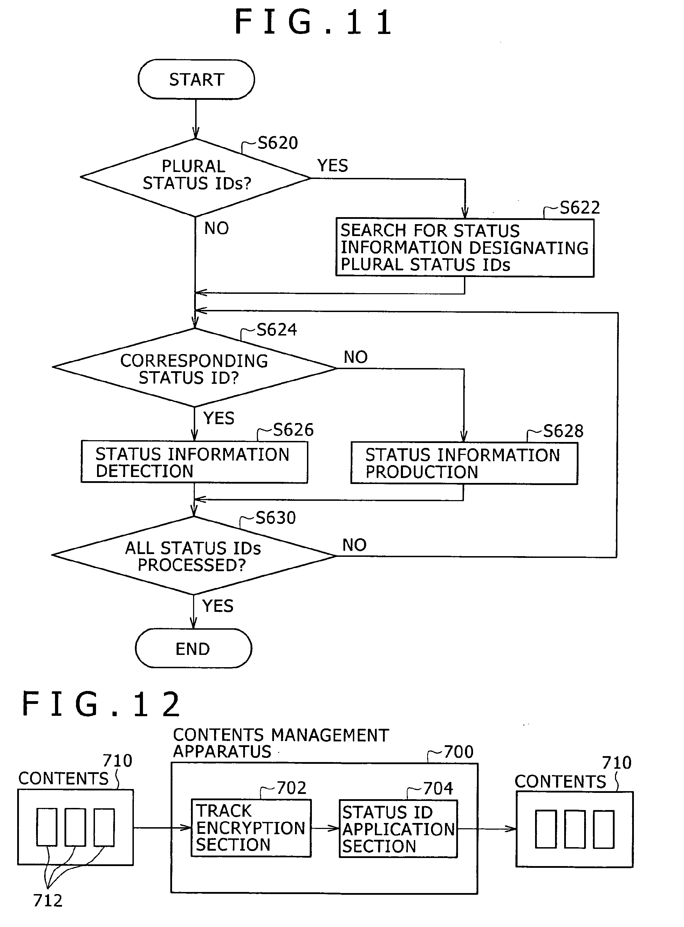

At the status information extraction step S606, status information corresponding to the status IDs read at the status ID reading step S602 is extracted. A procedure of the extraction of status information is described with reference to FIG. 11.

FIG. 11 illustrates a general procedure of the status information extraction step S606. Here, it is first decided whether or not a plurality of status IDs have been read (step S620). If a plurality of status IDs have been read, then the status information which designates the plurality of status IDs is searched from the data storage section 120 (step S622). If status information which designates the plurality of status IDs is searched out, then it is decided whether or not a designation condition of the status information, for example, a condition of logical ORing and/or logical ANDing of the plurality of status IDs, coincides with the combinations of the read status IDs. If the condition coincides, then the status information is coordinated with the tracks having the status IDs.

Then, it is decided whether or not the status information corresponding to each of the status IDs is stored in the data storage section 120 (step S624). If it is decided that the status information is stored in the data storage section 120, then the status information is extracted and the track having the status ID and the extracted status information are coordinated with each other (step S626). On the other hand, if it is decided at step S624 that the status information is not stored in the data storage section 120, then new status information is produced in response to the license extracted at the license extraction step S604, and the track having the status ID and the extracted status information are coordinated with each other (step S628). Also the status information produced newly is stored into the data storage section 120. Such a series of processes are executed for all of the status IDs read at the status ID reading step S602 (step S630).

The reason why the expression "in response to the license" is used above is that status information and a license have a close relationship to each other and usually one piece of status information is provided corresponding to one license and it is intended to prevent illegal reproduction, replication and falsification of a content through the limitations to the status information and the license which are updated in response to a use state. While it is described above that one piece of status information is provided corresponding to one license, it is otherwise possible to coordinate a plurality of pieces of status information with one license or else coordinate a plurality of licenses with one piece of status information.

At the license decision step S608, the substance of the status information extracted at the status information extraction step S606 and the substance of the licenses are compared with each other to determine whether reproduction of the track should be permitted or inhibited. Such a use limitation to a license includes maximum values and permission/inhibition of recording into a recording medium of the reproduction time, reproduction period, number of times of reproduction, number of times by which copying is permitted and number of times of checkout of a track in a unit of a status ID, whether or not transfer of the license is permitted, whether or not there is a use log obligation and so forth. For example, as the limitation to the license, reproduction for seven hours in the maximum, that reproduction is permitted for two hours in the maximum after reproduction for the first time or reproduction is permitted three times in the maximum can be set. In this manner, in the present embodiment, a use limitation by a license can be imposed in a unit of a track or a group of tracks.

At the status information updating step S610, if it is necessary to perform updating of the status information in response to the track reproduction permission described above, then updating of the status information is performed. For example, if the license is limited by the number of times of reproduction, also the status information counts the number of times of reproduction accordingly and normally increments the number of times of reproduction by one at every time of reproduction. Further, if status information is produced newly at the status information extraction step S606, then items of the number of times of reproduction and so forth are produced and the number of times of reproduction of 0 is described newly.

At the track reproduction step S612, a track key of the security information coordinated with each of the tracks selected at the track selection step S600 is called in response the reproduction permission at the license decision step S608, and the tracks are decoded with the track keys and reproduced. If a track to be reproduced has a plurality of status IDs, then since a limitation by a license is annexed to each of the status IDs, it may be set that the entire selected track tracks should not be reproduced if any one piece of the status information exceeds the limitation of the license or otherwise that only the track relating to the status information to which the limitation is applied should not be reproduced simultaneously.

By such a content reproduction method, it is possible to manage a use state for each of one, two or more tracks included in a content and perform prescribed updating irrespective of the number of tracks to be reproduced in an overlapping relationship with each other.

### <Fourth Embodiment: Content Management Apparatus>

Now, a content management apparatus for producing a content which may be reproduced by the content reproduction apparatus described above is described.

FIG. 12 schematically shows a configuration of the content management apparatus 700. Referring to FIG. 12, the content management apparatus 700 shown includes a track encryption section 702 and a status ID annexing section 704.

The track encryption section 702 encrypts each of tracks 712 of a content 710 inputted thereto and stores a track key for decrypting the encrypted track into security information of the track. Such encryption can prevent illegal track reproduction which is not based on the license.

The status ID annexing section 704 applies, for each track received through the track encryption section 702, a status ID for specifying the track and the status information representing a use state of the track.

At this time, if a plurality of tracks are to be managed with one piece of status information, then the status ID annexing section 704 can apply the same status ID to the plurality of tracks. By the configuration described, one content can be managed with a plurality of pieces of status information and a plurality of licenses.

Also a computer program for causing a computer to function as the content management apparatus 700 and a content management method by which the operations of the components of the content management apparatus 700 are carried out are provided.

While some preferred embodiments of the present invention have been described above with reference to the accompanying drawings, naturally the present invention is not limited to the embodiments. It is apparent that a person skilled in the art could make various alterations or modifications without departing from the spirit and scope of the invention as defined in claims, and it is understood that also such alterations and modifications naturally fall within the technical scope of the present invention.

For example, while, in the embodiments described above, a status ID annexed to each individual track is described taking a video track, an audio track, a subtitle track and so forth as examples of the track, the types of tracks are not limited to the tracks mentioned, but various data which form contents can be annexed as tracks.

Further, while, in the embodiments described above, the positions at which status IDs, licenses and status information are specified for the convenience of description, if a coordination relationship between such data is established, then the stored positions may be supposed as those in any storage medium which can be referred to.

Further, while, in the foregoing description of the embodiments, it is described that global and local variables can be defined in status information, such global variables and local variables can be defined not only for variables in such a region as described above but also for any variable of a content reproduction apparatus or a computer program which functions as a content to be reproduced by the content reproduction apparatus.

The present invention can be applied to a content reproduction apparatus, a content reproduction method, a content management apparatus, a content management method and a computer program which are based on a license.

It should be understood by those skilled in the art that various modifications, combinations, subcombinations and alterations may occur depending on design requirements and other factors insofar as they are within the scope of the appended claims or the equivalents thereof.

## Claims

1. A content reproduction apparatus, comprising:
a data storage section for storing licenses of contents and status information representative of use states of the contents based on the licenses;
a track selection section operable in response to a reproduction request of any of the contents for selecting one, two or more tracks from among one, two or more tracks included in the content;
a status ID reading section for reading a status ID annexed to each of the tracks and specifying a relationship between the track and status information from the selected track;
a license extraction section for extracting a license corresponding to the status ID from said data storage section;
a status information extraction section for extracting, when the extracted license includes a use limitation condition, the status information corresponding to the status ID from said data storage section;
a license decision section for deciding whether or not the use state of the status information satisfies the use limitation condition of the license;
a status information updating section for updating the use state of the status information if the use limitation condition is satisfied; and
a track reproduction section for reproducing the track if the use limitation is satisfied.

2. The content reproduction apparatus according to claim 1, wherein
said status information extraction section extracts, if a plurality of tracks having the same status ID are selected by said track selection section, one piece of status information corresponding to the plurality of tracks, and
said status information updating section updates the one piece of status information for the plurality of tracks having the same status ID by one.

3. The content reproduction apparatus according to claim 1, wherein
the status information can designate a plurality of status IDs by logical ORing and/or logical ANDing,
said status information extraction section extracts, when a combination of status IDs of the tracks selected by said track selection section coincides with a condition of the status IDs designated by the status information, the status information, and
said status information updating section updates the status information for the tracks corresponding to the condition of the status IDs designated by the status information.

4. The content reproduction apparatus according to claim 1, wherein said track selection section selects tracks across a plurality of contents.

5. A computer program for causing a computer to function as:
a data storage section for storing licenses of contents and status information representative of use states of the contents based on the licenses;
a track selection section operable in response to a reproduction request of any of the contents for selecting one, two or more tracks from among one, two or more tracks included in the content;
a status ID reading section for reading a status ID annexed to each of the tracks and specifying a relationship between the track and status information from the selected track;
a license extraction section for extracting a license corresponding to the status ID from said data storage section;
a status information extraction section for extracting, when the extracted license includes a use limitation condition, the status information corresponding to the status ID from said data storage section;
a license decision section for deciding whether or not the use state of the status information satisfies the use limitation condition of the license;
a status information updating section for updating the use state of the status information if the use limitation condition is satisfied; and
a track reproduction section for reproducing the track if the use limitation is satisfied.

6. The computer program according to claim 5, wherein
said status information extraction section extracts, if a plurality of tracks having the same status ID are selected by said track selection section, one piece of status information corresponding to the plurality of tracks, and
said status information updating section updates the one piece of status information for the plurality of tracks having the same status ID by one.

7. The computer program according to claim 5, wherein
the status information can designate a plurality of status IDs by logical ORing and/or logical ANDing,
said status information extraction section extracts, when a combination of status IDs of the tracks selected by said track selection section coincides with a condition of the status IDs designated by the status information, the status information, and
said status information updating section updates the status information for the tracks corresponding to the condition of the status IDs designated by the status information.

8. The computer program according to claim 5, wherein said track selection section selects tracks across a plurality of contents.

9. A content reproduction method, comprising steps of:
selecting one, two or more tracks from among one, two or more tracks included in a content in response to a reproduction request of the content;
reading a status ID annexed to each of the tracks and specifying a relationship between the track and status information representative of a use state of the content based on a license from the selected track;
extracting a license corresponding to the status ID from a data storage section;
extracting, when the extracted license includes a use limitation condition, the status information corresponding to the status ID from said data storage section;
deciding whether or not the use state of the status information satisfies the use limitation condition of the license;
updating the use state of the status information if the use limitation condition is satisfied; and
reproducing the track if the use limitation is satisfied.

10. A content management apparatus, comprising:
a status ID annexing section for annexing, to each one, two or more tracks included in a content, a status ID for specifying a relationship between the track or tracks and status information representative of a use state of the track or tracks;
said status ID annexing section annexing, if a plurality of tracks are to be managed with one piece of status information, the same status ID to the plurality of tracks.

11. A computer program for causing a computer to function as:
a status ID annexing section for annexing, to each one, two or more tracks included in a content, a status ID for specifying a relationship between the track or tracks and status information representative of a use state of the track or tracks;
said status ID annexing section annexing, if a plurality of tracks are to be managed with one piece of status information, the same status ID to the plurality of tracks.

12. A content management method, comprising a step of
annexing, to each one, two or more tracks included in a content, a status ID for specifying a relationship between the track or tracks and status information representative of a use state of the track or tracks, wherein;
the status ID annexing step annexing, if a plurality of tracks are to be managed with one piece of status information, the same status ID to the plurality of tracks.
